# EUROPEAN PATENT APPLICATION

(11) **EP 4 734 027 A1**
(43) Date of publication of application: **29.04.2026**
(21) Application number: 25165120.4
(22) Date of filing: 20.03.2025
(51) Int. Cl.: G06Q 20/32, G01S 5/02, G06V 20/52, G07B 15/00, G07B 15/02

(54) **METHOD AND APPARATUS FOR DETECTING FARE EVASION USING IMAGE INFORMATION AND WIRELESS SIGNAL**

(30) Priority: 23.10.2024 KR 20240145497
(71) Applicant: Korea Railroad Research Institute, Uiwang-si, Gyeonggi-do 16105 (KR)
(72) Inventor: YU, Seung Min, 12573 Yangpyeong-gun (KR); LEE, Sang Keun, 16103 Uiwang-si (KR); YOU, So Young, 31079 Cheonan-si (KR); JEONG, Eun Bi, 15484 Ansan-si (KR); LEE, Jun, 18445 Hwaseong-si (KR)
(74) Representative: impuls legal PartG mbB

(57) **Abstract**

A method and an apparatus for detecting fare evasion using image information and wireless signals. According to an embodiment of a present disclosure, a method for detecting fare evasion comprising: estimating positions of passengers within a detection area or trajectories of the passengers within the detection area based on image information, estimating positions of devices within the detection area or trajectories of the devices within the detection area based on wireless signals, determining whether the passengers and the devices match by comparing the positions of the passengers with the positions of the devices or comparing the trajectories of the passengers with the trajectories of the devices and determining fare-evading passengers among the passengers based on the matching result.

## Description

### TECHNICAL FIELD

The present disclosure relates to a method and an apparatus for detecting fare evasion using image information and wireless signals. More specifically, the present disclosure relates to a method and an apparatus for detecting fare evasion by estimating positions and trajectories of passengers and IoT devices using wireless signals from the IoT devices and image information.

### BACKGROUND

The content described below simply provides background information related to the present embodiment and does not constitute the prior art.

Public transportation comprehensively refers to all types of transportation facilities and means that provide transport services accessible to the general public. Public transportation broadly includes air, sea, road, rail, regional, interregional, and international transport systems; in urban transportation systems, representative examples thereof include urban railways, city buses, and community or feeder bus facilities.

The fare payment method for public transportation, which electronically automates fare processing, has primarily been performed based on a tagging method using Radio Frequency Identification (RFID) cards. However, when the tagging method using RFID cards is used, passengers carrying luggage or wearing gloves may face difficulties tagging RFID cards, causing significant delays and congestion in public transportation. Consequently, research is being conducted to adopt tagless or gate-free methods as fare payment solutions for public transportation. The tagless method allows passengers with a smart device to pay the public transportation fare using wireless signals without tagging their RFID card, enabling seamless entering and exiting of vehicles. The gate-free method operates in the same way as the tagless method but is performed in a situation without involving a gate.

When the tagless or gate-free method is performed, payment recognition rate decreases in a crowded situation, which may lead to fare evasion. In particular, the beacon used in the tagless method is vulnerable to hacking, which may result in fare evasion through hacking. Therefore, research on detecting fare evasion is necessary to ensure smooth operation of the tagless or gate-free method.

### Technical Problem

In view of the above, the present disclosure aims to detect fare evasion by estimating positions and trajectories of passengers and Internet of Things (IoT) devices using wireless signals from the IoT devices and image information.

The technical objects of the present disclosure are not limited to those described above, and other technical objects not mentioned above may be understood clearly by those skilled in the art from the descriptions given below.

### Summary

According to the present disclosure, a method performed by a fare evasion detection apparatus includes estimating positions of passengers within a detection area or trajectories of the passengers within the detection area based on image information, the image information is information obtained by capturing the detection area. The method also includes estimating positions of devices within the detection area or trajectories of the devices within the detection area based on wireless signals, the devices are those devices for which fare has been paid. The method also includes determining whether the passengers and the devices match by comparing the positions of the passengers with the positions of the devices or comparing the trajectories of the passengers with the trajectories of the devices. The method also includes determining fare-evading passengers among the passengers based on the matching result.

According to the present disclosure, an apparatus for includes a position estimation unit estimating positions of devices within a detection area based on wireless signals and positions of passengers within the detection area based on image information, the image information is information obtained by capturing the detection area, and the devices are those devices for which fare has been paid, a trajectory estimation unit estimating trajectories of the passengers within the detection area based on the image information and trajectories of the devices within the detection area based on the wireless signals and a fare evasion detection unit determining whether the passengers and the devices match by comparing the positions of the passengers with the positions of the devices or comparing the trajectories of the passengers with the trajectories of the devices and determining fare-evading passengers among the passengers based on the matching result.

According to the present disclosure, a computer-readable recording medium is a computer-readable recording medium storing instructions, the instructions, when executed by the computer, may cause the computer to perform estimating positions of passengers within a detection area or trajectories of the passengers within the detection area based on image information, the image information is information obtained by capturing the detection area. The instructions, when executed by the computer, may also cause the computer to perform estimating positions of devices within the detection area or trajectories of the devices within the detection area based on wireless signals, the devices are those devices for which fare has been paid. The instructions, when executed by the computer, may also cause the computer to perform determining whether the passengers and the devices match by comparing the positions of the passengers with the positions of the devices or comparing the trajectories of the passengers with the trajectories of the devices. The instructions, when executed by the computer, may also cause the computer to perform determining fare-evading passengers among the passengers based on the matching result.

### Advantageous Effects

The present disclosure provides an advantageous effect of accurately detecting fare evasion committed by passengers.

Also, according to one embodiment, an advantageous effect of preventing fare evasion by passengers may be achieved, thereby alleviating financial deterioration in the operation of public transportation.

The technical effects of the present disclosure are not limited to the technical effects described above, and other technical effects not mentioned herein may be understood to those skilled in the art to which the present disclosure belongs from the description below.

### BRIEF DESCRIPTION OF THE DRAWINGS

FIG. 1 is a block diagram illustrating an apparatus for detecting fare evasion according to one embodiment of the present disclosure.
FIG. 2 illustrates a method for detecting fare evasion according to one embodiment of the present disclosure.
FIG. 3 is a flow diagram illustrating a process of detecting fare evasion by estimating positions of passengers and Internet of Things (IoT) devices according to one embodiment of the present disclosure.
FIG. 4 is a flow diagram illustrating a process of detecting fare evasion by estimating trajectories of passengers and IoT devices according to one embodiment of the present disclosure.
FIG. 5 is a flow diagram illustrating a method for detecting fare evasion according to one embodiment of the present disclosure.

### DETAILED DESCRIPTION

Hereinafter, some exemplary embodiments of the present disclosure will be described in detail with reference to the accompanying drawings. In the following description, like reference numerals preferably designate like elements, although the elements are shown in different drawings. Further, in the following description of some embodiments, a detailed description of known functions and configurations incorporated therein will be omitted for the purpose of clarity and for brevity.

Additionally, various terms such as first, second, A, B, (a), (b), etc., are used solely to differentiate one component from the other but not to imply or suggest the substances, order, or sequence of the components. Throughout this specification, when a part 'includes' or 'comprises' a component, the part is meant to further include other components, not to exclude thereof unless specifically stated to the contrary. The terms such as 'unit', 'module', and the like refer to one or more units for processing at least one function or operation, which may be implemented by hardware, software, or a combination thereof.

The following detailed description, together with the accompanying drawings, is intended to describe exemplary embodiments of the present disclosure, and is not intended to represent the only embodiments in which the present disclosure may be practiced.

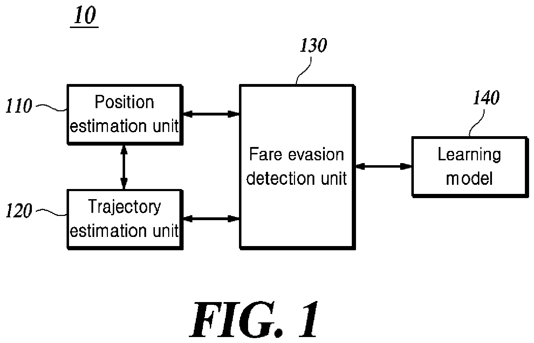

FIG. 1 is a block diagram illustrating an apparatus for detecting fare evasion according to one embodiment of the present disclosure.

Referring to FIG. 1, an apparatus for detection of fare evasion 10 according to one embodiment of the present disclosure (in what follows, referred to as a fare evasion detection apparatus) may include all or part of a position estimation unit 110, a trajectory estimation unit 120, a fare evasion detection unit 130, and a learning model 140. The fare evasion detection apparatus 10 and its constituting elements may be implemented in hardware, software, or a combination of hardware and software. Also, the functionality of each constituting element may be implemented in software, and one or more processors may be implemented to execute the software function corresponding to each constituting element.

The position estimation unit 110 estimates the positions of passengers within the detection area using image information. Here, the image information may be obtained through CCTV. The detection area may be an area designated for detecting fare evasion committed by passengers. The position estimation unit 110 estimates the positions of IoT devices within the detection area using wireless signals. Here, wireless signals may be acquired from IoT devices carried by passengers. For example, IoT devices may include various devices such as smartphones, laptops, wearable devices, and smart mobility devices.

The position estimation unit 110 may estimate the positions of IoT devices using only the wireless signals acquired from IoT devices for which payment of the public transportation fare has been completed. The payment of the public transportation fare may be performed in advance using IoT devices. Alternatively, payment of the public transportation fare may be conducted using IoT devices in a payment area located before the detection area. For example, when a passenger carrying an IoT device passes through the payment area, the public transportation fare may be automatically paid via the IoT device.

The trajectory estimation unit 120 estimates the trajectories of passengers within the detection area using image information. The trajectory estimation unit 120 estimates the trajectories of IoT devices within the detection area using wireless signals acquired from the IoT devices. The trajectory estimation unit 120 may estimate the trajectories of IoT devices using only the wireless signals acquired from IoT devices for which payment of the public transportation fare has been completed. The trajectory estimation unit 120 may estimate the trajectories of passengers and IoT devices based on the positions of passengers and IoT devices estimated by the position estimation unit 110.

The fare evasion detection unit 130 detects fare evasion by comparing the estimated positions of passengers derived from image information with the estimated positions of IoT devices derived from wireless signals and determining whether the estimated positions match. The fare evasion detection unit 130 detects fare evasion by comparing the estimated trajectories of passengers derived from image information with the estimated trajectories of IoT devices derived from wireless signals and determining whether the estimated trajectories match. The determination of a match is based on whether the distance between estimated positions or the sum of distances at each time point between estimated trajectories is below a threshold. Here, the threshold may be a predefined arbitrary value. The fare evasion detection unit 130 may utilize features of passengers to detect fare evasion in addition to the estimated positions or trajectories of passengers and IoT devices. The passenger features may include behavior, clothing, movements, facial features, identification information, height, and boarding time.

For example, if a fare-paid passenger and a fare-evading passenger move along the same trajectory, the fare evasion detection unit 130 may determine which passenger is the fare-evading passenger by utilizing features of each passenger in addition to the estimated positions and trajectories.

The fare evasion detection unit 130 may detect fare evasion by utilizing the learning model 140. The learning model may be a model designed for detecting fare evasion. The learning model 140 may be a deep learning-based model. The fare evasion detection apparatus 10 may further include a learning unit (not shown) to pre-train the learning model 140. The learning unit may pre-train the learning model 140 using supervised learning, unsupervised learning, semi-supervised learning, and/or reinforcement learning. Here, since specific methods for the learning unit to train the learning model 140 based on training data are well-known in the corresponding technical field, detailed descriptions thereof will be omitted.

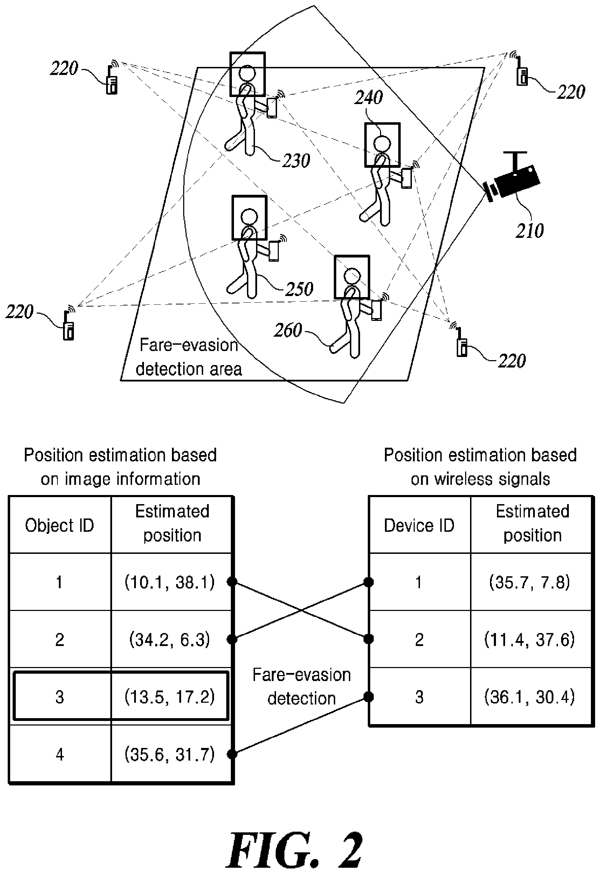

FIG. 2 illustrates a method for detecting fare evasion according to one embodiment of the present disclosure.

Referring to FIG. 2, the position estimation unit 110 estimates the positions of passengers within the detection area using image information. The positions of passengers may be estimated in the form of coordinates. The image information may be obtained using CCTV 210 installed within the detection area to monitor the detection area. The position estimation unit 110 may estimate the positions of four passengers based on the image information. The position estimation unit 110 may assign an object ID, which serves as an identification number, to each of the four passengers. The position estimation unit 110 may estimate the position of a passenger 230 with object ID 1 as (10.1, 38.1), the position of a passenger 240 with object ID 2 as (34.2, 6.3), the position of a passenger 250 with object ID 3 as (13.5, 17.2), and the position of a passenger 260 with object ID 4 as (35.6, 31.7).

The position estimation unit 110 uses wireless signals to estimate the positions of IoT devices for which the public transportation fare has been paid. The positions of IoT devices may be estimated in the form of coordinates. Wireless signals within the detection area may be obtained from IoT devices for which the public transportation fare has been paid and may be acquired using a plurality of wireless signal detectors 220. The position estimation unit 110 may assign a device ID, which serves as an identification number, to each IoT device for which the public transportation fare has been paid. The position estimation unit 110 may estimate the position of an IoT device with device ID 1 as (35.7, 7.8), the position of an IoT device with device ID 2 as (11.4, 37.6), and the position of an IoT device with device ID 3 as (36.1, 30.4).

The trajectory estimation unit 120 may estimate the trajectories of passengers and IoT devices within the fare evasion detection area using image information and wireless signals. The trajectory estimation unit 120 may utilize image information to estimate the trajectories of a passenger 230 with object ID 1, a passenger 240 with object ID 2, a passenger 250 with object ID 3, and a passenger 260 with object ID 4 based on their positions at each time point. The trajectory estimation unit 120 may use wireless signals to estimate the trajectories of an IoT device with device ID 1, an IoT device with device ID 2, and an IoT device with device ID 3 based on the positions of IoT devices at each time point, for which the public transportation fare has been paid. The trajectory estimation unit 120 may estimate the trajectories of passengers and IoT devices by utilizing the positions of passengers and IoT devices estimated by the position estimation unit 110.

The fare evasion detection unit 130 compares the positions of passengers estimated by using image information with the positions of IoT devices estimated by using wireless signals, determines whether the positions match, and detects passengers committing fare evasion. The fare evasion detection unit 130 may determine that a specific passenger and a specific IoT device are matched if the distance between the estimated position of the corresponding passenger and the estimated position of the corresponding IoT device is less than or equal to a threshold value. The corresponding passenger may be a passenger carrying the corresponding IoT device for which the public transportation fare has been paid. The fare evasion detection unit 130 may determine that a specific passenger and a specific IoT device are matched if the sum of distances at each time point between the estimated trajectory of the corresponding passenger and the estimated trajectory of the corresponding IoT device is less than or equal to a threshold value. The corresponding passenger may be a passenger carrying the corresponding IoT device for which the public transportation fare has been paid.

Since the distance between the estimated position (10.1, 38.1) of the passenger 230 with object ID 1 and the estimated position (11.4, 37.6) of the IoT device with device ID 2 is less than or equal to the threshold value, the passenger 230 with object ID 1 may be a passenger carrying the IoT device with device ID 2. Accordingly, the fare evasion detection unit 130 may determine that the passenger 230 with object ID 1 is not a passenger committing fare evasion. Similarly, since the distance between the estimated position (34.2, 6.3) of the passenger 240 with object ID 2 and the estimated position (35.7, 7.8) of the IoT device with device ID 1 is less than or equal to the threshold value, the passenger 240 with object ID 2 may be a passenger carrying the IoT device with device ID 1. Accordingly, the fare evasion detection unit 130 may determine that the passenger 240 with object ID 2 is not a passenger committing fare evasion.

Since no IoT device exists within the threshold distance from the estimated position (13.5, 17.2) of the passenger 250 with object ID 3, the fare evasion detection unit 130 may determine that the passenger 250 with object ID 3 is a passenger committing fare evasion. Since the distance between the estimated position (35.6, 31.7) of the passenger 260 with object ID 4 and the estimated position (36.1, 30.4) of the IoT device with device ID 3 is less than or equal to the threshold value, the passenger 260 with object ID 4 may be a passenger carrying the IoT device with device ID 3. Accordingly, the fare evasion detection unit 130 may determine that the passenger 260 with object ID 4 is not a passenger committing fare evasion.

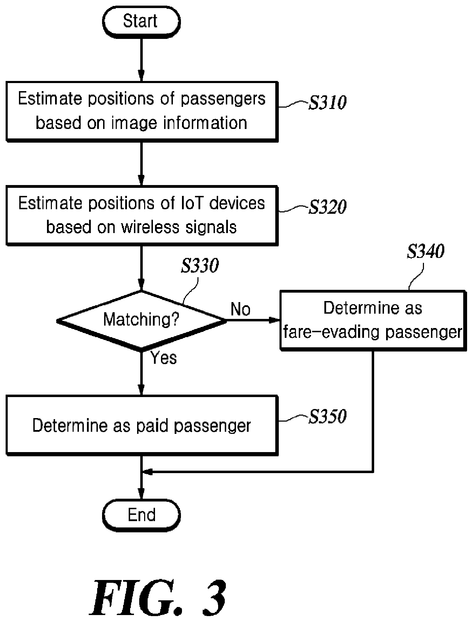

FIG. 3 is a flow diagram illustrating a process of detecting fare evasion by estimating positions of passengers and IoT devices according to one embodiment of the present disclosure.

Referring to FIG. 3, the position estimation unit 110 estimates the positions of passengers within the detection area based on image information S310. The position estimation unit 110 estimates the positions of IoT devices within the detection area based on wireless signals S320. Here, IoT devices refer to those devices for which the public transportation fare has been paid. The fare evasion detection unit 130 determines whether the estimated positions of passengers within the detection area match the estimated positions of IoT devices within the detection area S330. The determination of a match is based on whether the distances between the estimated positions of passengers and the estimated positions of IoT devices are less than or equal to a threshold value.

If the estimated position of a specific passenger does not match the estimated positions of IoT devices within the detection area S330-NO, the fare evasion detection unit 130 determines that the corresponding passenger is a fare-evading passenger S340. The fare evasion detection unit 130 may transmit information on the fare-evading passenger to a control center or a staff member who monitors fare evasion. If the estimated position of a specific passenger matches one of the estimated positions of IoT devices within the detection area S330-YES, the fare evasion detection unit 130 determines that the corresponding passenger is a fare-paid passenger S350.

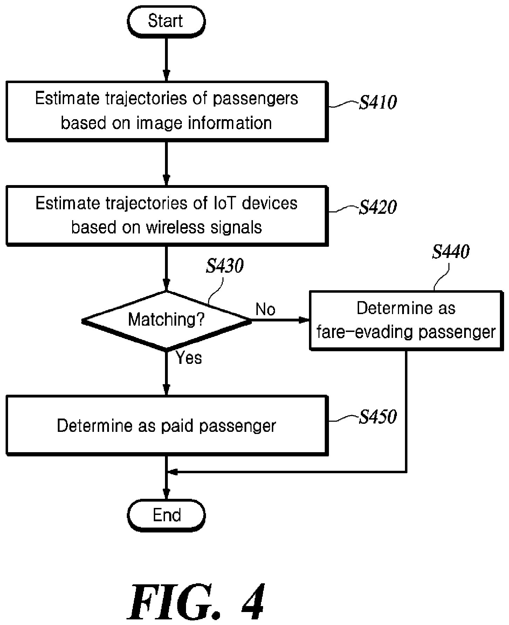

FIG. 4 is a flow diagram illustrating a process of detecting fare evasion by estimating trajectories of passengers and IoT devices according to one embodiment of the present disclosure.

Referring to FIG. 4, the trajectory estimation unit 120 estimates the trajectories of passengers within the detection area based on image information S410. The trajectory estimation unit 120 estimates the trajectories of IoT devices within the detection area based on wireless signals S420. Here, IoT devices refer to those devices for which the public transportation fare has been paid. The fare evasion detection unit 130 determines whether the estimated trajectories of passengers within the detection area match the estimated trajectories of IoT devices within the detection area S430. The determination of a match is based on whether the sum of distances at the respective time points between the estimated trajectories of passengers and the estimated trajectories of IoT devices is less than or equal to a threshold value.

If the estimated trajectory of a specific passenger does not match the estimated trajectories of IoT devices within the detection area S430-NO, the fare evasion detection unit 130 determines that the corresponding passenger is a fare-evading passenger S440. The fare evasion detection unit 130 may transmit information on the fare-evading passenger to a control center or a staff member who monitors fare evasion. If the estimated trajectory of a specific passenger matches one of the estimated trajectories of IoT devices within the detection area S430-YES, the fare evasion detection unit 130 determines that the corresponding passenger is a fare-paid passenger S450.

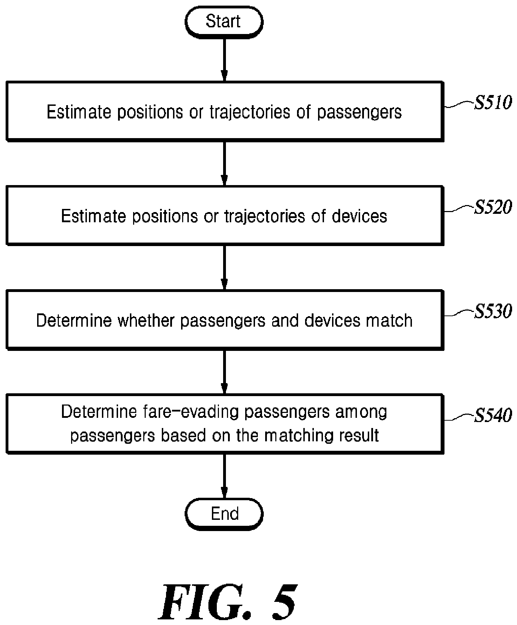

FIG. 5 is a flow diagram illustrating a method for detecting fare evasion according to one embodiment of the present disclosure.

Referring to FIG. 5, the position estimation unit 110 and the trajectory estimation unit 120 estimate the positions or trajectories of passengers within the detection area based on image information S510. The image information may be the information obtained from CCTV capturing the detection area. The position estimation unit 110 and the trajectory estimation unit 120 estimate the positions or trajectories of devices within the detection area based on wireless signals S520. The devices may be those devices that have completed fare payment.

The fare evasion detection unit 130 compares the positions of passengers with the positions of devices or compares the trajectories of passengers with the trajectories of devices to determine whether the passengers match the devices S530. When the positions of passengers are compared with the positions of devices, the process of determining the match may include a process of determining whether the distance between the positions of passengers and the positions of devices is less than or equal to a threshold value. When the trajectories of passengers are compared with the trajectories of devices, the process of determining the match may include a process of determining whether the sum of distances at the respective time points between the trajectories of passengers and the trajectories of devices is less than or equal to a threshold value. Here, the threshold value may be a predefined, arbitrary value.

Based on the matching result, the fare evasion detection unit 130 determines fare-evading passengers among passengers S540. The process of determining fare-evading passengers may include the process of determining fare-evading passengers among passengers using features of the passengers. The passenger features may include behavior, appearance, movements, identification information, and boarding time of the passengers. The fare evasion detection unit 130 may transmit the information on the fare-evading passengers to the control center.

Each element of the apparatus or method in accordance with the present invention may be implemented in hardware or software, or a combination of hardware and software. The functions of the respective elements may be implemented in software, and a microprocessor may be implemented to execute the software functions corresponding to the respective elements.

Various embodiments of systems and techniques described herein can be realized with digital electronic circuits, integrated circuits, field programmable gate arrays (FPGAs), application specific integrated circuits (ASICs), computer hardware, firmware, software, and/or combinations thereof. The various embodiments can include implementation with one or more computer programs that are executable on a programmable system. The programmable system includes at least one programmable processor, which may be a special purpose processor or a general purpose processor, coupled to receive and transmit data and instructions from and to a storage system, at least one input device, and at least one output device. Computer programs (also known as programs, software, software applications, or code) include instructions for a programmable processor and are stored in a "computer-readable recording medium."

The computer-readable recording medium may include all types of storage devices on which computer-readable data can be stored. The computer-readable recording medium may be a non-volatile or non-transitory medium such as a read-only memory (ROM), a random access memory (RAM), a compact disc ROM (CD-ROM), magnetic tape, a floppy disk, or an optical data storage device. In addition, the computer-readable recording medium may further include a transitory medium such as a data transmission medium. Furthermore, the computer-readable recording medium may be distributed over computer systems connected through a network, and computer-readable program code can be stored and executed in a distributive manner.

Although operations are illustrated in the flowcharts/timing charts in this specification as being sequentially performed, this is merely an exemplary description of the technical idea of one embodiment of the present disclosure. In other words, those skilled in the art to which one embodiment of the present disclosure belongs may appreciate that various modifications and changes can be made without departing from essential features of an embodiment of the present disclosure, that is, the sequence illustrated in the flowcharts/timing charts can be changed and one or more operations of the operations can be performed in parallel. Thus, flowcharts/timing charts are not limited to the temporal order.

Although exemplary embodiments of the present disclosure have been described for illustrative purposes, those skilled in the art will appreciate that various modifications, additions, and substitutions are possible, without departing from the idea and scope of the claimed invention. Therefore, exemplary embodiments of the present disclosure have been described for the sake of brevity and clarity. The scope of the technical idea of the present embodiments is not limited by the illustrations. Accordingly, one of ordinary skill would understand that the scope of the claimed invention is not to be limited by the above explicitly described embodiments but by the claims and equivalents thereof.

### CROSS-REFERENCE TO RELATED APPLICATION

This application claims the benefit of and priority to Korean Patent Application No. 10-2024-0145497, filed on October 23, 2024, the entire disclosure(s) of which is hereby incorporated herein by reference in its entirety.

## Claims

1. A method performed by a fare evasion detection apparatus, the method comprising:
estimating positions of passengers within a detection area or trajectories of the passengers within the detection area based on image information, the image information is information obtained by capturing the detection area;
estimating positions of devices within the detection area or trajectories of the devices within the detection area based on wireless signals, the devices are those devices for which fare has been paid;
determining whether the passengers and the devices match by comparing the positions of the passengers with the positions of the devices or comparing the trajectories of the passengers with the trajectories of the devices; and
determining fare-evading passengers among the passengers based on the matching result.

2. The method of claim 1, further comprising:
a process of transmitting information of the fare-evading passengers to a control center.

3. The method of claim 1, wherein, the determining whether the passengers and the devices match comprise:
when the positions of the passengers are compared with the positions of the devices, determining whether a distance between the positions of the passengers and the positions of the devices is less than or equal to a threshold value.

4. The method of claim 1, wherein, the determining whether the passengers and the devices match comprise:
when the trajectories of the passengers are compared with the trajectories of the devices, determining whether the sum of distances at the respective time points between trajectories of the passengers and the trajectories of the devices is less than or equal to a threshold value.

5. A method of claim 1, wherein the determining the fare-evading passengers comprises:
determining the fare-evading passengers among the passengers using features of the passengers,
wherein the features of the passengers include behavior, appearance, movement, identification information, and boarding time of the passengers.

6. An apparatus for detecting fare evasion comprising:
a position estimation unit estimating positions of devices within a detection area based on wireless signals and positions of passengers within the detection area based on image information, the image information is information obtained by capturing the detection area, and the devices are those devices for which fare has been paid;
a trajectory estimation unit estimating trajectories of the passengers within the detection area based on the image information and trajectories of the devices within the detection area based on the wireless signals; and
a fare evasion detection unit determining whether the passengers and the devices match by comparing the positions of the passengers with the positions of the devices or comparing the trajectories of the passengers with the trajectories of the devices and determining fare-evading passengers among the passengers based on the matching result.

7. The apparatus of claim 6, wherein the fare evasion detection unit transmits information of the fare-evading passengers to a control center.

8. The apparatus of claim 6, wherein, when the positions of the passengers are compared with the positions of the devices, the fare evasion detection unit determines the match by determining whether a distance between the positions of the passengers and the positions of the devices is less than or equal to a threshold value.

9. The apparatus of claim 6, wherein, when the trajectories of the passengers are compared with the trajectories of the devices, the fare evasion detection unit determines the match by determining whether the sum of distances at the respective time points between the trajectories of the passengers and the trajectories of the devices is less than or equal to a threshold value.

10. The apparatus of claim 6, wherein the fare evasion detection unit determines the fare-evading passengers among the passengers using features of the passengers,
wherein the features of the passengers include behavior, appearance, movement, identification information, and boarding time of the passengers.

11. A computer-readable recording medium storing instructions, wherein the instructions, when executed by a computer, cause the computer to perform:
estimating positions of passengers within a detection area or trajectories of the passengers within the detection area based on image information, wherein the image information is information obtained by capturing the detection area;
estimating positions of devices within the detection area or trajectories of the devices within the detection area based on wireless signals, wherein the devices are those devices for which fare has been paid;
determining whether the passengers and the devices match by comparing the positions of the passengers with the positions of the devices or comparing the trajectories of the passengers with the trajectories of the devices; and
determining fare-evading passengers among the passengers based on the matching result.
